# EUROPÄISCHE PATENTANMELDUNG

(11) **EP 4 044 568 A1**
(43) Veröffentlichungstag der Anmeldung: **17.08.2022**
(21) Anmeldenummer: 21156930.6
(22) Anmeldetag: 12.02.2021
(51) Int. Cl.: H04M 1/04, H04M 1/60, H04M 1/72502

(54) **PORTABLE FREISPRECHVORRICHTUNG MIT DECT-DONGLE MIT USB SCHNITTSTELLE**

(71) Anmelder: Gigaset Communications GmbH, 46395 Bocholt (DE)
(72) Erfinder: Kanani, Armin, 30974 Wenningsen (Deister) (DE)
(74) Vertreter: Michalski Hüttermann & Partner Patentanwälte mbB

(57) **Zusammenfassung**

Bei einer portablen Freisprechvorrichtung (1) zum Führen von Telefongesprächen, soll die Integration der portablen Freisprechvorrichtung (1) in verschiedene Anwendungsumgebung verbessert werden. Dies wird dadurch erreicht, dass die portable Freisprechvorrichtung (1) eine portable Freisprecheinheit (3) umfasst, wobei die portable Freisprecheinheit (3) zumindest ein Mikrofon (4), einen Ohrhörer (5) und einen Lautsprecher (6) umfasst, die portable Freisprechvorrichtung (1) weiter eine Dockingstation (2) zur Aufnahme der portablen Freisprecheinheit (3) umfasst, wobei die Dockingstation (2) eine erste Datenschnittstelle (10) umfasst und mittels der ersten Datenschnittstelle (10) und eines Datenkabels (12) mit einer Datenschnittstelle (14) einer Recheneinheit (13) verbindbar ist, die portable Freisprechvorrichtung (1) weiter einen Hardware-Dongle (7) umfasst, wobei zwischen dem Hardware-Dongle (7) und der portablen Freisprecheinheit (3) eine drahtlose Datenverbindung (9) herstellbar ist, wobei der Hardware-Dongle (7) wahlweise mit der Datenschnittstelle (14) der Recheneinheit (13) oder mit einer zweiten Datenschnittstelle (11) der Dockingstation (2) trennbar verbindbar ist, wobei wenn der Hardware-Dongle (7) mit der zweiten Datenschnittstelle (11) der Dockingstation (2) verbunden ist, die Dockingstation (2) mittels der ersten Datenschnittstelle (10) und des Datenkabels (12) mit der Datenschnittstelle (14) der Recheneinheit (13) verbunden ist, wobei die Recheneinheit (13) derart eingerichtet ist, eine Kommunikationsverbindung (15) in ein Kommunikationsnetzwerk (16) herzustellen.

## Beschreibung

Die Erfindung betrifft eine portable Freisprechvorrichtung zum Führen von Telefongesprächen.

Die Arbeitswelt erfährt seit einigen Jahren einen grundlegenden und strukturellen Wandel. "New Work" ist der Inbegriff für diese Transformation. Die Auslöser für die New Work Entwicklung sind vielfältig. Die Digitalisierung, Konnektivität und Globalisierung sowie der demographische Wandel sind unter anderem die Ursachen für den Wandel der Arbeitswelt. Mit dem Aufkommen des New Work Konzepts, weg von alten Strukturen, hin zu neuen und modernen Arbeitsweisen, wurden flexibel eingerichtete Arbeitsplätze immer wichtiger. Durch die Beförderung von Mitarbeitern ins Homeoffice, einem immer weiter steigenden mobilem Arbeiten und dem Konzept des "Desksharing" stieg die Nachfrage an einfach einzurichtenden Arbeitsplätzen, die gleichzeitig den Erfordernissen von Homeoffice Arbeitsplätzen und von mobilen Arbeitsplätzen genügen. Dabei wird die Integration von Kommunikationsmedien in einer einheitlichen Anwendungsumgebung immer wichtiger. Die Idee hinter "Unified Communications" ist, durch eine Zusammenführung aller Kommunikationsdienste die Erreichbarkeit von Kommunikationspartnern in verteilter Arbeit zu verbessern und so geschäftliche Prozesse zu beschleunigen. Insbesondere durch die steigende Zahl von digital geführten Konferenzen und Besprechungen steigt auch die Nachfrage nach verbesserten Freisprechvorrichtungen zum Führen von Telefongesprächen.

Aus dem Stand der Technik sind verschiedene Freisprechvorrichtungen bekannt, die jedoch nur schlecht an die sich verändernden Arbeitsbedingungen angepasst werden können. Egal, ob im Büro, Homeoffice oder unterwegs, jederzeit erreichbar zu sein, gehört für viele Unternehmen mittlerweile zum Standard. Ausgehend von dieser Situation ist es eine Aufgabe der vorliegenden Erfindung, eine portable Freisprechvorrichtung anzugeben, die auf einfache Weise in verschiedene Anwendungsumgebung integriert werden kann, um das Arbeiten in einer sich stetig sich verändernden Arbeitswelt weiter zu verbessern und so geschäftliche Prozesse zu beschleunigen.

Die Lösung der Aufgabe erfolgt durch die Merkmale der unabhängigen Ansprüche. Vorteilhafte Ausgestaltungen sind in den Unteransprüchen angegeben.

Erfindungsgemäß ist somit eine portable Freisprechvorrichtung zum Führen von Telefongesprächen angegeben, wobei die portable Freisprechvorrichtung eine portable Freisprecheinheit umfasst, wobei die portable Freisprecheinheit zumindest ein Mikrofon, einen Ohrhörer und einen Lautsprecher umfasst, die portable Freisprechvorrichtung weiter eine Dockingstation zur Aufnahme der portablen Freisprecheinheit umfasst, wobei die Dockingstation eine erste Datenschnittstelle umfasst und mittels der ersten Datenschnittstelle und eines Datenkabels mit einer Datenschnittstelle einer Recheneinheit verbindbar ist, die portable Freisprechvorrichtung weiter einen Hardware-Dongle umfasst, wobei zwischen dem Hardware-Dongle und der portablen Freisprecheinheit eine drahtlose Datenverbindung herstellbar ist, wobei der Hardware-Dongle wahlweise mit der Datenschnittstelle der Recheneinheit oder mit einer zweiten Datenschnittstelle der Dockingstation trennbar verbindbar ist, wobei wenn der Hardware-Dongle mit der zweiten Datenschnittstelle der Dockingstation verbunden ist, die Dockingstation mittels der ersten Datenschnittstelle und des Datenkabels mit der Datenschnittstelle der Recheneinheit verbunden ist, wobei die Recheneinheit derart eingerichtet ist, eine Kommunikationsverbindung in ein Kommunikationsnetzwerk herzustellen.

Ein wesentlicher Punkt der Erfindung liegt darin, dass die portable Freisprechvorrichtung mittels des Hardware-Dongles einfach z.B. in eine bereits vorhandene Arbeitsumgebung integriert werden kann. Insbesondere muss die Recheneinheit, die die Kommunikationsverbindung in ein Kommunikationsnetzwerk bereitstellt über keine Vorrichtung zur drahtlosen Datenübertragung verfügen. Dies wird über den Hardware-Dongle bereitgestellt. Unter einem Hardware-Dongle im Sinne dieser Erfindung kann ein Gerät verstanden werden, das beispielsweise an einen Computer angeschlossen wird und als Adapter dient. Insbesondere dient der Hardware-Dongle dazu, eine drahtlose Datenverbindung herzustellen. Ein wesentlicher Vorteil der Erfindung besteht darin, dass durch den Einsatz eines solchen Hardware-Dongles die portable Freisprechvorrichtung ohne zusätzliche Hardware betrieben werden kann.

In einer bevorzugten Ausführungsform der Erfindung sind die Datenschnittstelle des Hardware-Dongles, die Datenschnittstellen der Dockingstation und die Datenschnittstelle der Recheneinheit als eine USB-Schnittstelle ausgeführt sind. Universal Serial Bus (USB) Schnittstellen sind weit verbreitet und erleichtern die Erweiterung der Arbeitsumgebung mittels der portablen Freisprechvorrichtung.

In einer weiteren Ausführungsform der Erfindung ist die drahtlose Datenverbindung eine Datenverbindung nach dem DECT-Standard und/oder Bluetooth-Standard und/oder WLAN-Standard. Die drahtlose Datenverbindung zwischen dem Hardware-Dongle und der portablen Freisprecheinheit kann mittels gängiger Datenübertragungsstandards hergestellt werden. Da die drahtlose Datenverbindung über den Hardware-Dongle allein hergestellt wird, muss die Recheneinheit über keine zusätzliche Vorrichtung zur drahtlosen Datenübertragung verfügen. Daher kann insbesondere für die drahtlose Datenübertragung zwischen dem Hardware-Dongle und der portablen Freisprecheinheit ein speziell für die Bedürfnisse der Freisprechvorrichtung eingerichteter Datenübertragungsstandard verwendet werden. Insbesondere kann die drahtlose Datenverbindung eine Datenverbindung nach dem DECT-Standard umfassen, da hierdurch die portable Freisprecheinheit auch in bereits bestehende DECT-Netzwerke einfach integriert werden kann.

In einer bevorzugten Ausführungsform der Erfindung ist die Kommunikationsverbindung eine auf das Internet-Protokoll (IP) basierende VoIP-Verbindung und das Kommunikationsnetzwerk ein VoIP-Kommunikationsnetzwerk. Hierbei kann die Recheneinheit auch ein Desktoptelefon sein, wobei der Hardware-Dongle mit dem Desktoptelefon verbunden werden kann. Für das Telefonieren mit Gesprächspartnern in einem VoIP-Kommunikationsnetzwerk ist die Verwendung spezieller IP-Telefone jedoch nicht erforderlich. So kann auch der PC am Arbeitsplatz oder unterwegs ein Laptop, Tablet oder Smartphone genutzt werden.

In einer weiteren Ausführungsform der Erfindung umfasst die portable Freisprecheinheit einen Näherungssensor, wobei der Näherungssensor derart eingerichtet ist, bei Annäherung eines Objekts zur portablen Freisprecheinheit hin von dem Lautsprecher auf den Ohrhörer der portablen Freisprecheinheit oder bei Entfernen eines Objekts von der portablen Freisprecheinrichtung weg von dem Ohrhörer auf den Lautsprecher der portablen Freisprecheinheit umzuschalten. Dies ist vorteilhaft, da automatisch beispielsweise beim Wegnehmen der portablen Freisprecheinrichtung vom Ohr des Benutzers das Telefongespräch auf den Lautsprecher umgeschaltet wird und dadurch ein nahtloses Gespräch mit dem Gesprächspartner sichergestellt wird.

In einer Ausführungsform der Erfindung umfassen die portable Freisprecheinheit und die Dockingstation eine zusammenwirkende Ladeeinrichtung zum Laden der portablen Freisprecheinheit. Wird die portable Freisprecheinheit zusammen mit der Dockingstation verwendet, kann die portable Freisprecheinheit einfach geladen werden. In einer Ausführungsform der Erfindung kann die zusammenwirkende Ladeeinrichtung z.B. als ein USB-C Ladeadapter ausgeführt sein.

Nachfolgend wird die Erfindung unter Bezugnahme auf die anliegenden Zeichnungen anhand eines bevorzugten Ausführungsbeispiels näher erläutert. Es gilt jedoch der Grund-satz, dass die Ausführungsbeispiele die Erfindung nicht beschränken, sondern lediglich Ausführungsformen darstellen. Die dargestellten Merkmale können einzeln oder in Kombination mit weiteren Merkmalen der Beschreibung wie auch den Patentansprüchen einzeln oder in Kombination ausgeführt werden.

Es zeigt:

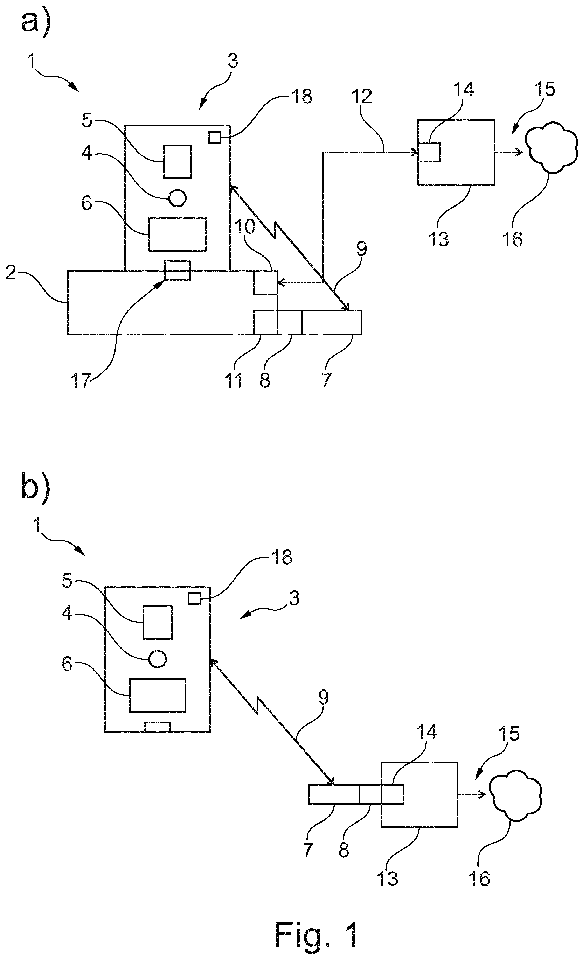

- Fig. 1: eine schematische Ansicht einer portablen Freisprechvorrichtung gemäß einem Ausführungsbeispiel der Erfindung.

Die Fig. 1 zeigt eine schematische Ansicht einer portablen Freisprechvorrichtung 1 zum Führen von Telefongesprächen gemäß einem Ausführungsbeispiel der Erfindung. Die portable Freisprechvorrichtung 1 umfasst eine portable Freisprecheinheit 3, wobei die portable Freisprecheinheit 3 zumindest über einen Ohrhörer 5, einen Lautsprecher 6 sowie ein Mikrofon 4 verfügt. Mittels der portablen Freisprecheinheit 3 können Anrufe entgegengenommen werden. Gespräche können dabei über den Ohrhörer 5 der portablen Freisprecheinrichtung 3 oder den Lautsprecher 6 geführt werden. In einem Ausführungsbeispiel der Erfindung verfügt die portable Freisprecheinheit 3 über einen Näherungssensor 18, wobei der Näherungssensor 18 derart eingerichtet ist, bei Annäherung des Ohrs des Benutzers zur portablen Freisprecheinheit 3 hin von dem Lautsprecher 6 auf den Ohrhörer 5 der portablen Freisprecheinheit 3 oder bei Entfernen des Ohrs von der portablen Freisprecheinheit 3 weg von dem Ohrhörer 5 auf den Lautsprecher 6 der portablen Freisprecheinheit 3 umzuschalten. Des Weiteren kann die portable Freisprecheinheit 3 über Tasten zum Annehmen oder Abweisen von Anrufen, über Tasten zum Umschalten von Anrufen auf den Lautsprecher 6 und über Tasten für eine Lautstärkeregulierung verfügen.

In Fig. 1 a) ist die portable Freisprechvorrichtung 1 gemäß einem ersten Verwendungsbeispiel der Erfindung gezeigt. Die portable Freisprechvorrichtung 1 verfügt weiter über eine Dockingstation 2, wobei die Dockingstation 2 zur Aufnahme und zum Halten der portablen Freisprecheinheit 3 eingerichtet ist. Die Dockingstation 2 sowie die portable Freisprecheinheit 3 verfügen in einem Ausführungsbeispiel über eine zusammenwirkende Ladeeinrichtung 17, um einen Ackumulator der portablen Freisprecheinheit 3 zu laden. Die Dockingstation 2 verfügt weiter über zwei Datenschnittstellen 10, 11, wobei die Dockingstation 2 mittels einer ersten Datenschnittstelle 10 und eines Datenkabels 12 mit einer Datenschnittstelle 14 einer Recheneinheit 13 verbindbar ist. Die Recheneinheit 13 kann beispielsweise ein Desktoptelefon, ein PC am Arbeitsplatz des Benutzers oder unterwegs auch ein Laptop, Tablet oder Smartphone sein.

Die in Fig. 1 a) gezeigte portable Freisprechvorrichtung 1 verfügt weiter über einen Hardware-Dongle 7. Der Hardware-Dongle 7 ist dazu eingerichtet zwischen dem Hardware-Dongle 7 und der portablen Freisprecheinheit 3 eine drahtlose Datenverbindung 9 herzustellen. Hierfür verfügen die portable Freisprecheinheit 3 sowie der Hardware-Dongle 7 über Sende- und Empfangseinheiten zum Aufbauen der drahtlosen Datenverbindung 9. Die drahtlose Datenverbindung 9 zwischen dem Hardware-Dongle 7 und der portablen Freisprecheinheit 3 kann mittels gängiger Datenübertragungsstandards hergestellt werden. Als drahtlose Datenverbindung 9 können Datenverbindungen nach dem DECT-Standard und/oder Bluetooth-Standard und/oder WLAN-Standard vorgesehen sein. Insbesondere kann die drahtlose Datenverbindung 9 eine Datenverbindung nach dem DECT-Standard umfassen, da hierdurch die portable Freisprecheinheit 3 auch in bereits bestehende DECT-Netzwerke einfach integriert werden kann.

Der Hardware-Dongle 7 ist in dem in Fig. 1 a) gezeigten Anwendungsbeispiels mit der Dockingstation 2 verbunden. Hierzu verfügt der Hardware-Dongle 7 ebenfalls über eine Datenschnittstelle 8. In einem Ausführungsbeispiel sind die Datenschnittstelle 8 des Hardware-Dongles 7 und die Datenschnittstellen 10, 11 der Dockingstation 2 insbesondere eine Universal Serial Bus (USB) Schnittstelle. USB-Schnittstellen sind weit verbreitet und erleichtern die Erweiterung der Arbeitsumgebung mittels der portablen Freisprechvorrichtung 1.

Ist der Hardware-Dongle 7 über die zweite Datenschnittstelle 11 mit der Dockingstation 2 verbunden und ist die Dockingstation 2 über die erste Datenschnittstelle 10 über das Datenkabel 12 mit der Recheneinheit 13 verbunden, kann über die Recheneinheit 13 eine Kommunikationsverbindung 15 in ein Kommunikationsnetzwerk 16 aufgebaut werden und Telefongespräche über den Hardware-Dongle 7 und die portabel Freisprecheinrichtung 3 der portablen Freisprechvorrichtung 1 geführt werden. Die Recheneinheit 13 ist dabei derart eingerichtet, eine Kommunikationsverbindung 15 in ein Kommunikationsnetzwerk 16 herzustellen. In einem Ausführungsbeispiel ist die Kommunikationsverbindung 15 eine auf das Internet-Protokoll, IP basierende VoIP-Verbindung und das Kommunikationsnetzwerk 16 ein VoIP-Kommunikationsnetzwerk. Dabei kann die Verbindung in das Kommunikationsnetzwerk 16 beispielsweise mittels eines "Softphones" über die Recheneinheit 13 bereitgestellt werden. Ein Softphone ist eine Software, die die Internettelefonie über PC, Laptop, Tablet oder Smartphone ermöglicht. Dafür wird das Programm bzw. die Telefonsoftware ganz einfach auf dem jeweiligen IP-fähigen Gerät installiert und simuliert dann gewissermaßen ein Telefon.

Die Fig. 1 b) zeigt eine schematische Ansicht einer portablen Freisprechvorrichtung 1 zum Führen von Telefongesprächen gemäß einem weiteren Verwendungsbeispiels der Erfindung. Bei dem in Fig. 1 b) gezeigten Verwendungsbeispiels ist der Hardware-Dongle 7 direkt mit einer Datenschnittstelle 14 der Recheneinheit 13 verbunden. Zwischen dem Hardware-Dongle 7 und der portablen Freisprecheinheit 3 besteht eine drahtlose Datenverbindung 9. Telefongespräche können direkt mittels der portablen Freisprecheinheit 3 über die Recheneinheit 13 und einer Kommunikationsverbindung 15 in das Kommunikationsnetzwerk 16 geführt werden. Dieses Ausführungsbeispiel ist besonders für das mobile Arbeiten vorteilhaft, da keine weitere Hardware zum Führen von Telefongesprächen mittels der portablen Freisprecheinheit 3 erforderlich ist.

### Bezugszeichenliste

| | |
|---|---|
| Portable Freisprecheinrichtung | 1 |
| Dockingstation | 2 |
| Portable Freisprecheinheit | 3 |
| Mikrofon | 4 |
| Ohrhörer | 5 |
| Lautsprecher | 6 |
| Hardware-Dongle | 7 |
| Datenschnittstelle Hardware-Dongle | 8 |
| drahtlose Datenverbindung | 9 |
| erste Datenschnittstelle Dockingstation | 10 |
| zweite Datenschnittstelle Dockingstation | 11 |
| Datenkabel | 12 |
| Recheneinheit | 13 |
| Datenschnittstelle Recheneinheit | 14 |
| Kommunikationsverbindung | 15 |
| Kommunikationsnetzwerk | 16 |
| Ladeeinrichtung | 17 |
| Näherungssensor | 18 |

## Patentansprüche

1. Portable Freisprechvorrichtung zum Führen von Telefongesprächen, **dadurch gekennzeichnet, dass**
die portable Freisprechvorrichtung (1) eine portable Freisprecheinheit (3) umfasst, wobei die portable Freisprecheinheit (3) zumindest ein Mikrofon (4), einen Ohrhörer (5) und einen Lautsprecher (6) umfasst,
die portable Freisprechvorrichtung (1) weiter eine Dockingstation (2) zur Aufnahme der portablen Freisprecheinheit (3) umfasst, wobei die Dockingstation (2) eine erste Datenschnittstelle (10) umfasst und mittels der ersten Datenschnittstelle (10) und eines Datenkabels (12) mit einer Datenschnittstelle (14) einer Recheneinheit (13) verbindbar ist,
die portable Freisprechvorrichtung (1) weiter einen Hardware-Dongle (7) umfasst, wobei zwischen dem Hardware-Dongle (7) und der portablen Freisprecheinheit (3) eine drahtlose Datenverbindung (9) herstellbar ist, wobei der Hardware-Dongle (7) wahlweise mit der Datenschnittstelle (14) der Recheneinheit (13) oder mit einer zweiten Datenschnittstelle (11) der Dockingstation (2) trennbar verbindbar ist, wobei wenn der Hardware-Dongle (7) mit der zweiten Datenschnittstelle (11) der Dockingstation (2) verbunden ist, die Dockingstation (2) mittels der ersten Datenschnittstelle (10) und des Datenkabels (12) mit der Datenschnittstelle (14) der Recheneinheit (13) verbunden ist, wobei die Recheneinheit (13) derart eingerichtet ist, eine Kommunikationsverbindung (15) in ein Kommunikationsnetzwerk (16) herzustellen.

2. Portable Freisprechvorrichtung nach Anspruch 1, **dadurch gekennzeichnet, dass**
die Datenschnittstelle (8) des Hardware-Dongles (7), die Datenschnittstellen (10, 11) der Dockingstation (2) und die Datenschnittstelle (14) der Recheneinheit (13) als eine USB-Schnittstelle ausgeführt sind.

3. Portable Freisprechvorrichtung nach einem der vorherigen Ansprüche, **dadurch gekennzeichnet, dass**
die drahtlose Datenverbindung (9) eine Datenverbindung nach dem DECT-Standard und/oder Bluetooth-Standard und/oder WLAN-Standard ist.

4. Portable Freisprechvorrichtung nach einem der vorherigen Ansprüche, **dadurch gekennzeichnet, dass**
die Kommunikationsverbindung (15) eine auf das Internet-Protokoll, IP basierende VoIP-Verbindung und das Kommunikationsnetzwerk (16) ein VoIP-Kommunikationsnetzwerk ist.

5. Portable Freisprechvorrichtung nach einem der vorherigen Ansprüche, **dadurch gekennzeichnet, dass**
die portable Freisprecheinheit (3) einen Näherungssensor (18) umfasst, wobei der Näherungssensor (18) derart eingerichtet ist, bei Annäherung eines Objekts zur portablen Freisprecheinheit (3) hin von dem Lautsprecher (6) auf den Ohrhörer (5) der portablen Freisprecheinheit (3) oder bei Entfernen eines Objekts von der portablen Freisprecheinheit (3) weg von dem Ohrhörer (5) auf den Lautsprecher (6) der portablen Freisprecheinheit (3) umzuschalten.

6. Portable Freisprecheinrichtung nach einem der vorherigen Ansprüche, **dadurch gekennzeichnet, dass**
die portable Freisprecheinheit (3) und die Dockingstation (2) eine zusammenwirkende Ladeeinrichtung (17) zum Laden der portablen Freisprecheinheit (3) umfassen.
